# EUROPEAN PATENT APPLICATION

(11) **EP 3 967 387 A1**
(43) Date of publication of application: **16.03.2022**
(21) Application number: 20830879.1
(22) Date of filing: 23.03.2020
(51) Int. Cl.: B01D 53/18, C01C 1/12, B01D 53/58

(54) **AMMONIA-CONTAINING TAIL GAS ABSORPTION SYSTEM**

(30) Priority: 26.06.2019 CN 201920976435 U
(71) Applicant: Jiahua Science&Technology Development (Shanghai ) Ltd., Shanghai 201210 (CN)
(72) Inventor: WEI, Hui, Shanghai 201210 (CN); WU, Cheng, Shanghai 201210 (CN); LI, Yubo, Shanghai 201210 (CN)
(74) Representative: Eyre, David Edward
(86) International application number: PCT/CN2020/080714
(87) International publication number: WO 2020/258940

(57) **Abstract**

An ammonia-containing tail gas absorption system, comprising at least two sets of absorption devices, wherein at least two transport pipelines are provided at inlets of some of the absorption devices, and the transport pipelines are used to communicate the absorption devices with an ammonia-containing tail gas outlet of a reactor or other absorption devices. Valves are provided on the transport pipelines, and the valves are used to control the connection and disconnection of the transport pipelines so as to switch the series-parallel relationship between the sets of absorption devices.

## Description

### TECHNICAL FIELD

The application relates to the field of tail gas treatment equipment, in particular to an ammonia-containing tail gas absorption system.

### BACKGROUD

The reaction tail gas produced in the industrial production of ethanolamine contains a large amount of ammonia gas. If the ammonia gas is directly discharged, atmospheric pollution is caused, and production raw material waste is also caused. Therefore, it is necessary to treat ammonia-containing tail gas produced in the industrial production of ethanolamine to recover ammonia.

Generally, the difficulty of absorption treatment of ammonia gas is also different according to the different ammonia content in production tail gas, and the different pressure and volume of the tail gas. For example, reactors commonly used in an ethanolamine production process include kettle-type reactors and tubular reactors, wherein the tubular reactor adopts a high-pressure process, the reaction pressure is 7 Mpa or above, discharged ammonia-containing tail gas is 1 Mpa or above, the volume of the tail gas is small, and ammonia gas is relatively easy to absorb, so single-stage absorption may be used to treat the ammonia-containing tail gas; however, due to the limitation of an equipment structure, the kettle-type reactor requires low reaction pressure and a high molar feed ratio of ammonia to ethylene oxide, so the produced tail gas has high ammonia content, low pressure and large volume, which requires multi-stage absorption treatment to recover ammonia from the ammonia-containing tail gas. In addition, in the ethanolamine production process, in order to obtain different products, it is necessary to adjust the molar feed ratio of ammonia to ethylene oxide, and at this time, the volume and ammonia gas concentration of reaction tail gas accordingly change according to different processes. However, existing ammonia-containing tail gas absorption systems are usually fixed absorption towers, and the connection relationship between the absorption towers is fixed, so that the ammonia-containing tail gas absorption systems can not meet the treatment requirements of different ammonia-containing tail gases produced by different reaction systems and reaction processes.

### SUMMARY

Therefore, the technical problem to be solved by this application is to overcome the defect in the prior art that ammonia-containing tail gas absorption towers can not adapt to the absorption of different ammonia-containing tail gases due to the fixed arrangement of ammonia-containing tail gas absorption systems, thereby providing an ammonia-containing tail gas absorption system.

In order to solve the above technical problem, the technical solution adopted by the application is as follows:

an ammonia-containing tail gas absorption system includes at least two sets of absorption devices, wherein at least two transport pipelines are provided at inlets of some of the absorption devices, the transport pipelines are used to communicate the absorption devices with an ammonia-containing tail gas outlet of a reactor or other absorption devices, valves are provided on the transport pipelines, and the valves are used to control the connection and disconnection of the transport pipelines so as to switch the series-parallel relationship between the sets of the absorption devices.

Further, each set of absorption device includes:
an absorption tower provided with a nozzle for reversely spraying absorption liquid on ammonia-containing tail gas to recover ammonia; and
an absorption cell communicating with the absorption tower and used for collecting and storing ammonia-containing absorption liquid discharged from the absorption tower.

Further, a filler for increasing a contact area between the ammonia-containing tail gas and the absorption liquid is further arranged in the absorption tower.

Further, each set of absorption device further includes a circulating pump, one end of the circulating pump communicates with the corresponding absorption cell and the other end of the circulating pump communicates with the corresponding nozzle, and the circulating pump is used for conveying ammonia-containing absorption liquid stored in the corresponding absorption cell to the corresponding nozzle.

Further, each set of absorption device further includes a cooler for cooling the ammonia-containing absorption liquid conveyed by the corresponding circulating pump.

Further, the cooler is at least one of a shell-and-tube heat exchanger, a plate heat exchanger or a double-pipe heat exchanger.

Further, the absorption cell is a horizontal storage tank or a vertical storage tank.

The technical solution of the application has the following advantages:
1. In the ammonia-containing tail gas absorption system provided by this application, the plurality of sets of absorption devices are provided, some of the absorption devices are provided with the plurality of transport pipelines, and the transport pipelines are provided with the valves, through which the connection and disconnection of the transport pipelines may be controlled so as to adjust the series-parallel relationship between the sets of the absorption devices; when ammonia-containing tail gas to be treated has high pressure and small volume, the absorption devices may be connected in series, so that ammonia gas in the ammonia-containing tail gas can be subjected to single-stage or multi-stage absorption treatment; when ammonia-containing tail gas to be treated has low pressure and large volume, the absorption devices may be switched to be connected in parallel, so that the ammonia-containing tail gas can simultaneously enter a plurality of absorption devices when entering the tail gas absorption system, thereby reducing the flow rate of the ammonia-containing tail gas in a single absorption device, prolonging the contact time between the ammonia-containing tail gas and treatment equipment, and further improving the absorption effect; the ammonia-containing tail gas absorption system provided by the application may be switched to different treatment modes according to different reaction systems and processes, so that the ammonia-containing tail gas absorption system can adapt to different reaction systems and processes; and operation is easy.
2. According to the absorption devices provided by this application, by arranging the filler in each absorption tower, the filler can increase the contact area between the ammonia-containing tail gas and the absorption liquid, so that the absorption liquid can absorb as much ammonia in the ammonia-containing tail gas as possible, thereby reducing the number of the absorption towers as much as possible, and achieving the purpose of reducing the treatment cost.
3. According to the absorption devices provided by this application, by arranging the circulating pump in each set of absorption device, the circulating pump is used to convey the absorption liquid with ammonia to the corresponding nozzle again for use, that is, the circulating pump enables recycling of the absorption liquid, and the absorption liquid needs to be replaced only when the ammonia content in the absorption liquid reaches the maximum solubility, thus realizing the maximization of the utilization rate of the absorption liquid, saving the absorption liquid and reducing the treatment cost.
4. According to the absorption devices provided by this application, the cooler is arranged in each set of absorption device to cool the ammonia-containing absorption liquid conveyed by the corresponding circulating pump, so that when the ammonia-containing absorption liquid is re-conveyed to the nozzles, the temperature difference between the ammonia-containing absorption liquid and the ammonia-containing tail gas is large, which enables the ammonia-containing absorption liquid to absorb as much ammonia in the tail gas as possible.

### BRIEF DESCRIPTION OF THE DRAWINGS

In order to more clearly explain the specific implementation modes of the application or the technical solution in the prior art, the drawings needed in the description of the specific implementation modes or the prior art will be briefly introduced below. Obviously, the drawings in the following description are only some implementation modes of the application. For those of ordinary skill in the art, other drawings can be obtained according to the these drawings without creative efforts.

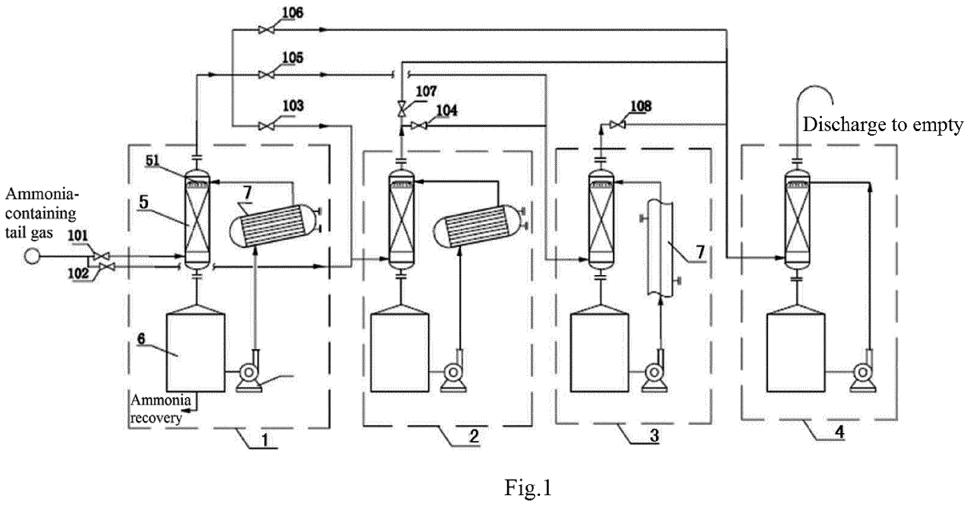

Fig. 1 is a structural schematic diagram of an ammonia-containing tail gas absorption system in Embodiment 1 of this application.

### Description of reference signs:

1. first absorption device; 2. second absorption device; 3. third absorption device; 4. fourth absorption device; 5. absorption tower; 51. nozzle; 6. absorption cell; 7. cooler; 101. first valve; 102. second valve; 103. third valve; 104. fourth valve; 105. fifth valve; 106. sixth valve; 107. seventh valve; and 108. eighth valve.

### DETAILED DESCRIPTION

The following embodiments are provided for a better understanding of this application, are not limited to the best implementation modes and do not limit the content and scope of protection of this application. Any product that is the same as or similar to this application, obtained by anyone under the enlightenment of this application or by combining this application with the features of other prior arts falls within the scope of protection of this application.

The specific experimental steps or conditions which are indicated in the embodiments can be carried out according to the operation or conditions of the conventional experimental steps described in the literature in the art. Reagents or instruments used without the manufacturers are conventional reagent products that are available in the market.

### Embodiment 1

This embodiment relates to an ammonia-containing tail gas absorption system, including a first absorption device 1, a second absorption device 2, a third absorption device 3 and a fourth absorption device 4.

A first transport pipeline is provided at an inlet of the first absorption device 1, and the first transport pipeline communicates the inlet of the first absorption device 1 with an ammonia-containing tail gas outlet of a reactor, and the first transport pipeline is provided with a first valve 101.

A second transport pipeline and a third transport pipeline are provided at an inlet of the second absorption device 2, wherein the second transport pipeline is used to communicate the inlet of the second absorption device 2 with the ammonia-containing tail gas outlet of the reactor, the second transport pipeline is provided with a second valve 102, the third transport pipeline is used to communicate the inlet of the second absorption device 2 with a gas outlet of the first absorption device 1, and the third transport pipeline is provided with a third valve 103.

A fourth transport pipeline and a fifth transport pipeline are provided at an inlet of the third absorption device 3, wherein the fourth transport pipeline is used to communicate the inlet of the third absorption device 3 with the gas outlet of the first absorption device 1, the fourth transport pipeline is provided with a fourth valve 104, the fifth transport pipeline is used to communicate the inlet of the third absorption device 3 with a gas outlet of the second absorption device 2, and the fifth transport pipeline is provided with a fifth valve 105.

A sixth transport pipeline, a seventh transport pipeline and an eighth transport pipeline are provided at an inlet of the fourth absorption device 4, wherein the sixth transport pipeline is used to communicate the inlet of the fourth absorption device 4 with the gas outlet of the first absorption device 1, the sixth transport pipeline is provided with a sixth valve 106, the seventh transport pipeline is used to communicate the inlet of the fourth absorption device 4 with the gas outlet of the second absorption device 2, the seventh transport pipeline is provided with a seventh valve 107, the eighth transport pipeline is used to communicate the inlet of the fourth absorption device 4 with a gas outlet of the third absorption device 3, and the eighth transport pipeline is provided with an eighth valve 108.

The first absorption device 1, the second absorption device 2, the third absorption device 3 and the fourth absorption device 4 each include: an absorption tower 5 and an absorption cell 6, wherein a nozzle 51 is provided in the absorption tower 5, the absorption tower 5 is used to reversely spray absorption liquid on ammonia-containing tail gas to recover ammonia, and an inlet of the absorption tower 5 is the inlet of the corresponding absorption device; the absorption cell 6 communicates with the absorption tower 5, and the absorption cell 6 is used to collect and store ammonia-containing absorption liquid discharged from the absorption tower 5; and workers may treat the ammonia-containing absorption liquid stored in the absorption cells 6 to recycle ammonia, and the ammonia-containing absorption liquid in each absorption cell 6 may be gathered and then treated together, or directly treated separately in each absorption cell 6.

The absorption liquid may be water, a phosphoric acid aqueous solution or a sulfuric acid aqueous solution, etc., and the type of the absorption liquid is not limited, as long as the absorption liquid can absorb ammonia. The concentrations of the phosphoric acid aqueous solution and the sulfuric acid aqueous solution are not limited either, and may be set according to the ammonia concentration of the ammonia-containing tail gas. For example, the commonly used concentration of the phosphoric acid aqueous solution is 10%-20%, and the commonly used concentration of the sulfuric acid aqueous solution is 10%-20%. More preferably, the concentration of the phosphoric acid aqueous solution is 15%-18.5%, and the concentration of the sulfuric acid aqueous solution is 15%-18.5%. The absorption cell 6 may be a horizontal storage tank or a vertical storage tank.

In order to increase a contact area between the ammonia-containing tail gas and the absorption liquid, a filler is further provided in the absorption tower 5. The arrangement of the filler may further prolong the contact time between the ammonia-containing tail gas and the absorption liquid, so that the ammonia in the ammonia-containing tail gas may be treated more thoroughly. The filler may be, and is not limited to, a plastic Pall ring, a ceramic Pall ring or a stainless steel Pall ring.

In order to improve the utilization rate of the absorption liquid, in this embodiment, one circulating pump is provided in each of the first absorption device 1, the second absorption device 2, the third absorption device 3 and the fourth absorption device 4. One end of the circulating pump communicates with the corresponding absorption cell 6, and the other end of the circulating pump communicates with the nozzle 51 in the corresponding absorption tower 5. The circulating pump is used for conveying the ammonia-containing absorption liquid stored in the corresponding absorption cell 6 to the corresponding nozzle 51, so that the absorption liquid may be recycled. The absorption liquid needs to be replaced only when the ammonia content in the absorption liquid reaches the maximum solubility, for example, the absorption liquid is replaced when a pH value of the phosphoric acid aqueous solution or sulfuric acid aqueous solution in the absorption cell 6 reaches 6-8, and more preferably, when the pH value of the phosphoric acid aqueous solution or sulfuric acid aqueous solution reaches 7-7.5; in this way, the absorption liquid can absorb as much ammonia as possible, thereby saving the absorption liquid and reducing the treatment cost. In addition, when the absorption devices are connected in series, the farther the position of the absorption device, the less ammonia can be recovered, that is, the ammonia concentration of the ammonia-containing absorption liquid in the absorption cell at this time is always low; at this time, the ammonia-containing absorption liquid with lower ammonia concentration in the absorption device located at the back can be used to replace the ammonia-containing absorption liquid with higher ammonia concentration in the absorption device located at the front, so as to further save the absorption liquid. Besides, it should be noted that the absorption liquid in the fourth absorption device 4 is preferably an acid solution, so that under special circumstances, the fourth absorption device 4 can absorb unreacted ethylene oxide in the reaction tail gas, thereby preventing VOC emission. When two absorption devices are connected in parallel, the absorption cells in the two absorption devices can communicate with each other, so as to ensure that the ammonia-containing absorption liquid in the two absorption devices has the same concentration.

Because the ammonia absorption process is exothermic, in order to increase the temperature difference between the ammonia-containing absorption liquid and the ammonia-containing tail gas when they make contact, coolers 7 are further arranged in the first absorption device 1, the second absorption device 2 and the third absorption device 3, and the coolers 7 are used to cool the ammonia-containing absorption liquid delivered by the circulating pumps, the cooler 7 may be a shell-and-tube heat exchanger, a plate heat exchanger or a double-pipe heat exchanger, and the number of the coolers 7 may be one or more. When there are a plurality of the coolers 7, the coolers 7 may be connected in parallel or in series. The specific setting of the coolers 7 may be determined according to the specific tail gas absorption amount, and when the tail gas absorption amount is small, the coolers 7 may be omitted.

When entering the absorption device, the ammonia-containing tail gas first enters the absorption tower 5 through an inlet of the absorption tower 5; at this time, the nozzle 51 reversely sprays the absorption liquid on the ammonia-containing tail gas, and the absorption liquid makes contact with the ammonia-containing tail gas to form the ammonia-containing absorption liquid; and the ammonia-containing tail gas after spray treatment is discharged to the next process via an outlet of the absorption tower 5, and the ammonia-containing absorption liquid is sent to the cooler 7 through the corresponding circulating pump to be cooled, and then transported to the corresponding nozzle 51 again to form liquid mist which makes contact with newly delivered ammonia-containing tail gas to absorb ammonia therein.

In this embodiment, the plurality of sets of absorption devices are arranged, the plurality of transport pipelines are provided on some of the absorption devices, and the valves are provided on the transport pipelines to control the connection and disconnection of the transport pipelines so as to adjust the series-parallel relationship between the sets of the absorption devices, so that the ammonia-containing tail gas absorption system can adapt to ammonia-containing tail gas with different properties. For example:
A. When the reactor is a tubular reactor, the molar feed ratio of ammonia to ethylene oxide is high, and the tail gas has small volume but high ammonia content, the first valve 101, the third valve 103, the fourth valve 104 and the eighth valve 108 are open, and the other valves are closed. The ammonia-containing tail gas first enters the first absorption device 1 to be treated. In the first absorption device 1, the filler is a stainless steel Pall ring, the absorption liquid is water, and the cooler 7 is a shell-and-tube heat exchanger. After treatment by the first absorption device 1, most of the ammonia in the tail gas is absorbed, and then the tail gas containing a trace amount of ammonia obtained after treatment by the first absorption device 1 is transported to the second absorption device 2 through the third transport pipeline. In the second absorption device 2, the filler is a stainless steel Pall ring, the absorption liquid is water, and the cooler 7 is a shell-and-tube heat exchanger. The tail gas containing a trace amount of ammonia obtained after treatment by the second absorption device 2 is transported to the third absorption device 3 through the fourth transport pipeline. In the third absorption device 3, the filler is a stainless steel Pall ring, the absorption liquid is water, and the cooler 7 is a double-pipe heat exchanger. The ammonia-containing tail gas obtained after treatment by the third absorption device 3 is finally transported to the fourth absorption device 4. In the fourth absorption device 4, the filler is a stainless steel Pall ring, and the absorption liquid is a 18.5% phosphoric acid aqueous solution. The fourth absorption device 4 is not provided with the cooler 7. The tail gas obtained after treatment by the fourth absorption device 4 can meet the discharge standard. When the pH value of the phosphoric acid aqueous solution in the absorption cell 6 is 7.2, the absorption liquid is replaced to maintain the ammonia absorption capacity of the phosphoric acid aqueous solution.
B. When the reactor is a kettle-type reactor, the tail gas has large volume, the molar feed ratio of ammonia to ethylene oxide is high, and the ammonia content is high, the first valve 101, the second valve 102, the fourth valve 104, the fifth valve 105 and the eighth valve 108 are open, and the other valves are closed. At this time, the first absorption device 1 and the second absorption device 2 are connected in parallel. The ammonia-containing tail gas output from the reactor simultaneously enters the first absorption device 1 and the second absorption device 2 for treatment, thereby reducing the flow rate of the ammonia-containing tail gas in a single absorption device and prolonging the treatment time of the ammonia-containing tail gas. The volume of the ammonia-containing tail gas obtained after simultaneous treatment by the first absorption device 1 and the second absorption device 2 is greatly reduced. At this time, the tail gas containing a trace amount of ammonia is sequentially transported to the third absorption device and the fourth absorption device 4 for treatment. The tail gas obtained after treatment by the fourth absorption device 4 can meet the discharge standard. The fillers in the first absorption device 1, the second absorption device 2, the third absorption device 3 and the fourth absorption device 4 are all stainless steel Pall rings. The absorption liquid in the first absorption device 1, the second absorption device 2 and the third absorption device 3 is water, and the absorption liquid in the fourth absorption device 4 is a 15% sulfuric acid aqueous solution. The coolers 7 in the first absorption device 1 and the second absorption device 2 are shell-and-tube heat exchangers, and the cooler 7 in the third absorption device 3 is a double-pipe heat exchanger.
C. When the reactor is a kettle-type reactor, the molar feed ratio of ammonia to ethylene oxide is low, and the tail gas has large volume and low ammonia content, the opening and closing states of the valves of the absorption system are the same as those in B, and only the absorption liquid in the fourth absorption device 4 needs to be replaced with water.
D. When the reactor is a tubular reactor, the molar feed ratio of ammonia to ethylene oxide is low, and the tail gas has small volume and low ammonia content, the first valve 101 and the sixth valve 106 are open, and the other valves are closed. The tail gas output from the reactor is first input into the first absorption device 1 for treatment. In the first absorption device 1, the filler is a stainless steel Pall ring, the absorption liquid is water, and the cooler 7 is a shell-and-tube heat exchanger. The tail gas obtained after treatment by the first absorption device 1 is transported to the fourth absorption device 4 for treatment. The tail gas obtained after treatment by the fourth absorption device 4 can meet the discharge standard. In the fourth absorption device 4, the filler is a stainless steel Pall ring, and the absorption liquid is water.

The ammonia-containing tail gas absorption system provided by this embodiment can be switched to different treatment modes according to different reaction systems and processes, so that the ammonia-containing tail gas absorption system can adapt to different reaction systems and processes, and operation is easy.

Obviously, the above-mentioned embodiments are only examples for clear explanation, and are not intended to limit the implementation modes. For those of ordinary skill in the art, other changes or modifications in different forms can be made on the basis of the above description. It is neither necessary nor possible to exhaust all the embodiments here. However, the obvious changes or modifications derived therefrom are still within the scope of protection of this application.

## Claims

1. An ammonia-containing tail gas absorption system, **characterized by** comprising at least two sets of absorption devices, wherein at least two transport pipelines are provided at inlets of some of the absorption devices, the transport pipelines are used to communicate the absorption devices with an ammonia-containing tail gas outlet of a reactor or other absorption devices, valves are provided on the transport pipelines, and the valves are used to control the connection and disconnection of the transport pipelines so as to switch the series-parallel relationship between the sets of the absorption devices.

2. The ammonia-containing tail gas absorption system according to claim 1, **characterized in that** each set of absorption device comprises:
an absorption tower (5) provided with a nozzle (51) for reversely spraying absorption liquid on ammonia-containing tail gas to recover ammonia; and
an absorption cell (6) communicating with the absorption tower (5) and used for collecting and storing ammonia-containing absorption liquid discharged from the absorption tower (5).

3. The ammonia-containing tail gas absorption system according to claim 2, **characterized in that** a filler for increasing a contact area between the ammonia-containing tail gas and the absorption liquid is further arranged in the absorption tower (5).

4. The ammonia-containing tail gas absorption system according to claim 2, **characterized in that** each set of absorption device further comprises a circulating pump, one end of the circulating pump communicates with the corresponding absorption cell (6) and the other end of the circulating pump communicates with the corresponding nozzle (51), and the circulating pump is used for conveying ammonia-containing absorption liquid stored in the corresponding absorption cell (6) to the corresponding nozzle (51).

5. The ammonia-containing tail gas absorption system according to claim 4, **characterized in that** each set of absorption device further comprises a cooler (7) for cooling the ammonia-containing absorption liquid conveyed by the corresponding circulating pump.

6. The ammonia-containing tail gas absorption system according to claim 5, **characterized in that** the cooler (7) is at least one of a shell-and-tube heat exchanger, a plate heat exchanger or a double-pipe heat exchanger.

7. The ammonia-containing tail gas absorption system according to claim 2, **characterized in that** the absorption cell (6) is a horizontal storage tank or a vertical storage tank.
